# EUROPEAN PATENT APPLICATION

(11) **EP 4 613 582 A1**
(43) Date of publication of application: **10.09.2025**
(21) Application number: 24183951.3
(22) Date of filing: 24.06.2024
(51) Int. Cl.: B60T 13/68

(54) **WORKING VEHICLE AND METHOD FOR CONTROLLING WORKING VEHICLE**

(30) Priority: 05.03.2024 JP 2024032780
(71) Applicant: Takeuchi Mfg. Co., Ltd., Nagano 389-0605 (JP)
(72) Inventor: SATO, Tomonori, Nagano 389-0605 (JP); WATANABE, Takahiro, Nagano 389-0605 (JP); NONOMURA, Kengo, Nagano, 389-0605 (JP)
(74) Representative: TBK

(57) **Abstract**

There is provided a working vehicle and a method for controlling a working vehicle that can improve operability when travel and work operations are repeated. A working vehicle (1) includes: a travel unit (10) that is operated by travel operation means (42) and brake operation means (44); a working unit (12, 14) that is operated by hydraulic pressure; a main brake circuit (60) that generates a braking force in keeping with an operated amount when the brake operation means (44) is in an operated state; and an auxiliary brake circuit (70) that generates a predetermined braking force when the travel operation means (42) is in a non-operated state.

## Description

### Technical Field

The present invention relates to a working vehicle and a method for controlling a working vehicle.

### Background Art

One known example of a working vehicle is a hydraulic excavator equipped with a lower body to which tires are attached, an upper body mounted on the lower body, and a working unit that is attached to the lower body or the upper body and is operated by hydraulic pressure (that is, hydraulic oil at a predetermined pressure).

A hydraulic excavator is equipped with a brake unit that is operated by hydraulic pressure. Although the brake unit is normally used as a service brake that slows or stops the vehicle during travelling, the brake unit is sometimes also used as a work brake that firmly holds the vehicle in a stopped state during excavation work or the like (the expression "applying the work brake" may also be used.

In the latter case, it is typical to have the brake unit operate continuously using a configuration where the brake unit is hydraulically locked by operating a switch installed inside the cab (see Patent Document 1: Japanese Laid-open Patent Publication No. 2013-147148) or a configuration that locks the brake pedal with a locking mechanism when the brake pedal has been fully depressed.

### Summary of Invention

### Technical Problem

However, with the configuration described above, to apply the work brake, it is necessary to press a switch or to lock the brake pedal with a locking mechanism. This means that when travel and work operations are repeated frequently, there is a problem that control operations are cumbersome.

### Solution to Problem

The present invention is made in view of the above described circumstances, and has an object of providing a working vehicle and a method for controlling a working vehicle that can improve operability when travel and work operations are repeated.

The present invention has been accomplished under the solutions as disclosed below.

A working vehicle according to one aspect is a working vehicle including: a travel unit that is operated by a travel operation unit and a brake operation unit; a working unit that is operated by hydraulic pressure; a main brake circuit that generates a braking force in keeping with an operated amount when the brake operation unit is in an operated state; and an auxiliary brake circuit that generates a predetermined braking force when the travel operation unit is in a non-operated state.

According to the above configuration, it is possible to apply a work brake by placing the travel operation unit in a non-operated state. Accordingly, it is unnecessary to press a switch to apply the work brake or to lock the brake pedal with a locking mechanism, which can improve operability when travel and work operations are repeated.

It is preferable for the working vehicle to further include an HST for driving the travel unit and a control unit that controls operations of at least the travel unit and the HST, wherein the control unit reduces an output current value for control operations of the HST when the travel operation means has been in a non-operated state, and then outputs a first signal, as the predetermined braking force, to the auxiliary brake circuit, the first signal being set to an intermediate braking force between zero braking force and a set maximum braking force, when the output current value has become zero.

The auxiliary brake circuit should preferably include a solenoid valve that controls the predetermined braking force based on a control signal outputted from the control unit.

After the control unit has outputted the first signal for a predetermined time, the control unit preferably outputs, when a vehicle speed is zero, a second signal that generates the set maximum braking force as the predetermined braking force to the auxiliary brake circuit and preferably continues to output, when the vehicle speed is not zero, the first signal that generates the intermediate braking force as the predetermined braking force to the auxiliary brake circuit.

The control unit preferably sets the predetermined time relatively shorter in a low-speed travel mode and sets the predetermined time relatively longer in a high-speed travel mode.

A method for controlling a working vehicle according to one aspect of the present invention is a method for controlling a working vehicle including a travel unit that is operated by a travel operation unit and a brake operation unit and a working unit that is operated by hydraulic pressure, the method including: generating a braking force in keeping with an operated amount when the brake operation unit is in an operated state; and generating a predetermined braking force when the travel operation unit is in a non-operated state.

### Advantageous Effects of Invention

According to a working vehicle and a method for controlling a working vehicle according to aspects of the present invention, it is possible to improve operability when travel and work operations are repeated.

### Brief Description of Drawings

FIG. 1 is a perspective view depicting one example of a working vehicle according to an embodiment of the present invention.
FIG. 2 is a diagram useful in explaining a braking system of the working vehicle depicted in FIG. 1.
FIG. 3 is a flowchart depicting one example of a processing content of a control unit relating to an automatic work brake function.
FIG. 4 is a schematic diagram depicting one example of a timing chart corresponding to the flowchart in FIG. 3.
FIG. 5 is a schematic diagram depicting another example of a timing chart corresponding to the flowchart in FIG. 3.

### Description of Embodiments

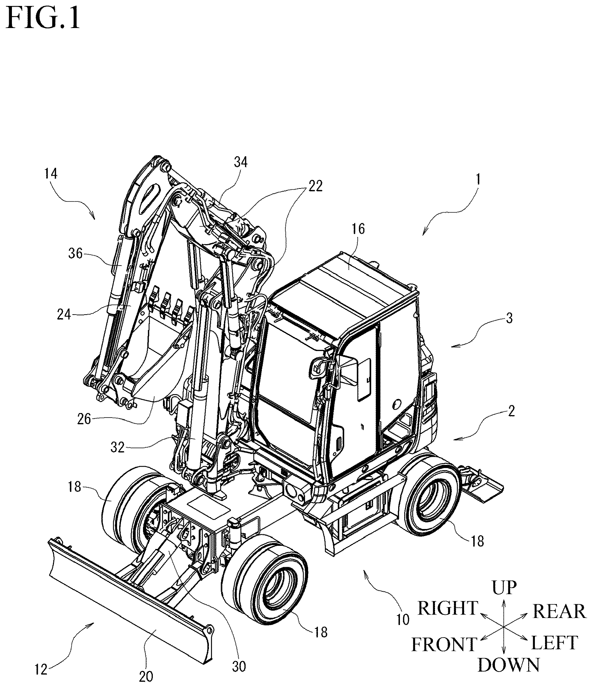

Several embodiments of the present invention will now be described in detail with reference to the attached drawings. FIG. 1 is a schematic view (a perspective view from front upper left) of one example of a working vehicle 1 according to the present embodiment. Note that for ease of explanation, the up-down, left-right, and front-rear directions in the drawings are indicated by arrows. In all of the drawings used to explain the embodiments, members with the same functions have been assigned the same reference numerals and duplicated description thereof may be omitted.

As depicted in FIG. 1, the working vehicle 1 is equipped with a lower body 2 that is capable of travelling, an upper body 3 that is mounted on the lower body 2 and is capable of slewing, working units 12 and 14 that are attached to the lower body 2 and the upper body 3 and are operated by hydraulic pressure, and a cab 16 that is mounted on the upper body 3.

The lower body 2 is equipped with a travel unit 10 for travelling. The travel unit 10 has a four-wheel drive configuration where two driving wheels 18, which have tires fitted onto the outside of the wheels, are provided at both the front and the rear sides of the vehicle.

The working vehicle 1 includes, as one example of the working unit 12, a blade 20 that is driven by a hydraulic cylinder 30. As one example of the working unit 14, a boom 22, an arm 24, and a detachable attachment 26 that are driven by hydraulic cylinders 32, 34, and 36 are provided. Note that although an example where a bucket has been attached as the attachment 26 is illustrated, the present invention is not limited to this. The driving mechanism for driving each hydraulic cylinder includes, for example, a hydraulic pump (not illustrated) that is driven by a driving source, a control valve (not illustrated), and the like.

The working vehicle 1 also includes an engine (for example, a diesel engine or a gasoline engine) 38 that burns fuel (as examples, diesel or gasoline) as the driving source mentioned above. Note that the driving source may be configured to use an electric motor or configured to use both an engine and an electric motor (a so-called "hybrid system"), neither of which is illustrated.

The cab 16 includes a travel pedal 42 as a travel operating means for starting and accelerating the working vehicle 1. The cab 16 also includes a brake pedal 44 as a brake operating means for decelerating and stopping the working vehicle 1. In the following description, a state where an operated amount of the pedals 42 and 44 is zero may be referred to as "off" (or "the non-operated state") and a state where the operated amount of the pedals 42 and 44 is not zero, that is, a state where the pedals 42, 44 are depressed (operated) may be referred to as "on" (or "the operated state"). Note that neither the travel operating means nor the brake operating means is limited to a pedal.

The working vehicle 1 includes a control unit 50 that performs overall control of the working vehicle 1. The control unit 50 is connected by signals to the travel pedal 42. The control unit 50 is also connected by signals to various sensors (as one example, a vehicle speed sensor described later) that detect vehicle information to be used for controlling the working vehicle 1. The control unit 50 performs computation based on vehicle information detected by the travel pedal 42, the various sensors, and the like, and outputs the computation result as control signals to various parts of the working vehicle 1.

Next, the travelling system of the working vehicle 1 will be described.

The working vehicle 1 is constructed to travel using a Hydraulic Static (or "HydroStatic) Transmission (HST). One example configuration for driving the travel unit 10 includes a travel hydraulic pump and a travel hydraulic motor (neither of which is illustrated). The travel hydraulic pump is a variable displacement hydraulic pump that is driven by the engine 38, and is configured so that the discharged amount of hydraulic oil can be adjusted by changing the inclination angle of a swash plate (not illustrated). The inclination angle of the swash plate is set based on the value of an output current (or "control signal") outputted from the control unit 50 in keeping with the operated amount of the travel pedal 42. The travel hydraulic motor is a hydraulic motor driven by hydraulic oil discharged from the travel hydraulic pump. The travel hydraulic motor is connected to a gear case, so that power is transmitted from the gear case to the rear wheel axle and from the gear case to the front wheel axle via a propeller shaft (none of which are illustrated).

The front wheel-side axle is provided with a vehicle speed sensor (not illustrated) that detects vehicle speed information (as one example, the rotational speed of a gear (not illustrated)). The control unit 50 calculates the vehicle speed based on the vehicle speed information outputted from the vehicle speed sensor.

The working vehicle 1 also includes a gear mechanism (not illustrated) that switches between at least a "low-speed travel mode" and a "high-speed travel mode". This gear mechanism includes a transmission control valve (not illustrated), and switches the travel mode based on a control signal outputted from the control unit 50. As one example, the low-speed travel mode is a travel mode where the rotational speed of the travel hydraulic motor is low and the driving force is large. On the other hand, the high-speed travel mode is a travel mode where the rotational speed of the travel hydraulic motor is high and the driving force is low. Note that the configuration may further include other driving modes.

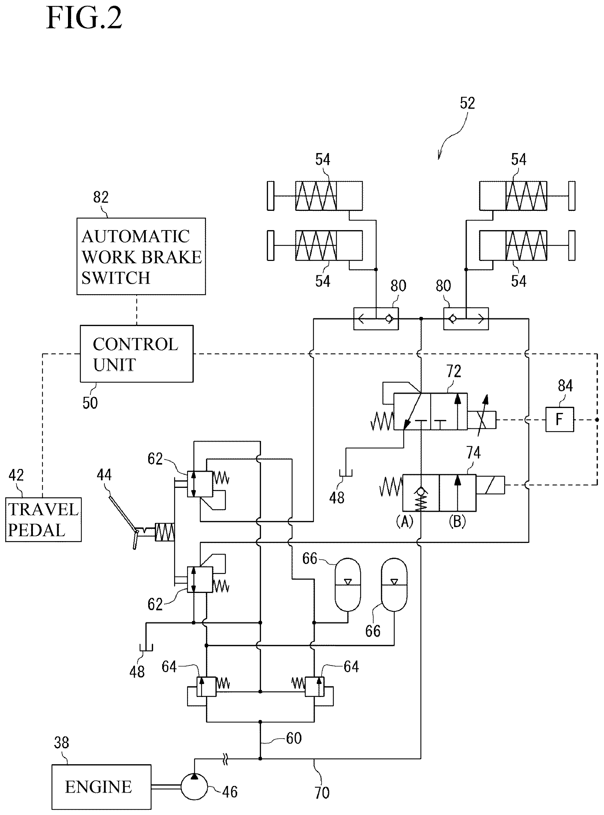

Next, the brake system of the working vehicle 1 will be described with reference to the schematic diagram in FIG. 2. The solid lines in FIG. 2 schematically represent connections in hydraulic systems, and the broken lines schematically depict connections of electrical signal systems. Note that FIG. 2 depicts only the principal parts related to the present embodiment.

The working vehicle 1 includes a hydraulic pump 46 driven by the engine 38, and brake units 52 operated by hydraulic oil supplied from the hydraulic pump 46. As one example, the brake units 52 are typical hydraulic disc brakes equipped with disc rotors (not illustrated) that rotate together with the respective driving wheels 18, brake pads (not illustrated) as friction materials, and hydraulic brake cylinders 54 that press the brake pads onto the disc rotors, and are configured to generate braking forces (frictional forces) in keeping with the pressing force of the brake pads.

Here, the working vehicle 1 includes, as a hydraulic circuit that supplies hydraulic oil from the hydraulic pump 46 to the brake units 52, a main brake circuit 60 and an auxiliary brake circuit 70 connected in parallel to the main brake circuit 60. The main brake circuit 60 and the auxiliary brake circuit 70 are connected to the brake units 52 via shuttle valves 80.

The main brake circuit 60 includes brake valves 62 whose degree of opening is set according to the operated amount of the brake pedal 44. With this configuration, the hydraulic oil flowing into the main brake circuit 60 is adjusted to a flow rate in keeping with the degree of opening of the brake valves 62 and sent to the shuttle valves 80.

The main brake circuit 60 also includes relief valves 64, which are disposed upstream of the brake valves 62, and accumulators 66, which are connected between the brake valves 62 and the relief valves 64. The relief valves 64 are pressure control valves that keep the downstream pressure at a set value. The accumulators 66 are sources that supply hydraulic oil, such as when the engine 38 has stopped.

The auxiliary brake circuit 70 includes a brake valve 72 whose degree of opening is set based on a control signal outputted from the control unit 50. By doing so, the hydraulic oil that has flowed into the auxiliary brake circuit 70 is adjusted to a flow rate in keeping with the degree of opening of the brake valve 72 and sent to the shuttle valves 80. As one example, the brake valve 72 is a proportional solenoid valve. This enables high-speed and accurate flow control.

The auxiliary brake circuit 70 includes a switching valve 74 disposed upstream of the brake valve 72. The switching valve 74 is a normally closed electromagnetic valve, and operates in conjunction with the brake valve 72 based on a control signal outputted from the control unit 50. The switching valve 74 suppresses leakage of hydraulic oil at the brake valve 72 (that is, hydraulic oil flow out into the hydraulic oil tank 48), and reduces the operating load on hydraulic devices including the hydraulic pump 46.

The shuttle valves 80 are high pressure selection valves that select the hydraulic oil with the higher pressure out of the hydraulic oil sent from the main brake circuit 60 (that is, the main brake circuit pressure) and the hydraulic oil sent from the auxiliary brake circuit 70 (that is, the auxiliary brake circuit pressure), and supply the selected hydraulic oil to the brake unit 52.

Accordingly, when the brake pedal 44 is depressed, the brake valves 62 are activated, and when the main brake circuit pressure becomes higher than the auxiliary brake circuit pressure, the hydraulic oil that has passed through the main brake circuit 60 is supplied via the shuttle valves 80 to the brake units 52. By doing so, the brake units 52 are activated in response to a pressing of the brake pedal 44, which means that the brake units 52 can be used as a service brake during travelling.

On the other hand, when the brake valve 72 is activated by a control signal outputted from the control unit 50 and the auxiliary brake circuit pressure has become higher than the main brake circuit pressure, the hydraulic oil passing through the auxiliary brake circuit 70 is supplied via the shuttle valves 80 to the brake units 52. By doing so, the brake units 52 will be activated regardless of whether the brake pedal 44 is being pressed, which means that the brake unit 52 can be used as a work brake during work.

In the present embodiment, when the travel pedal 42 is released (i.e., becomes off), the control unit 50 outputs a control signal to open the brake valve 72 to a predetermined degree of opening. Accordingly, when the travel pedal 42 is off, the hydraulic oil that has flowed into the auxiliary brake circuit 70 is adjusted to a predetermined flow rate and is sent to the shuttle valves 80 (which is to say, supplied to the brake units 52). That is, the auxiliary brake circuit 70 is a hydraulic circuit that generates a predetermined braking force when the travel pedal 42 has become off.

In this way, the working vehicle 1 has a function (hereinafter sometimes referred to as "automatic work brake function") of automatically applying a work brake, with the operation of releasing (or "turning off") the travel pedal 42 as a trigger. By doing so, it becomes unnecessary to press a switch or lock the brake pedal in a locking mechanism to apply the work brake. That is, it is possible to control travelling and the work brake by merely performing on/off operations of the travel pedal 42. This improves operability when travel and work operations are frequently repeated.

The working vehicle 1 according to the present embodiment realizes an automatic work brake function with a simple mechanism and hydraulic circuit, which makes the vehicle easy to assemble. As an example application of the present embodiment, it is also possible, by installing the auxiliary brake circuit 70 and the shuttle valve 80, to retrofit an automatic work brake function to an existing working vehicle equipped with only the main brake circuit 60.

The automatic work brake function is set at on or off by an automatic work brake switch 82 provided in the cab 16. This automatic work brake switch 82 is connected by signals to the control unit 50. When the automatic work brake function has been switched on, the control unit 50 enters a state where it can output a control signal that drives the brake valve 72 and the switching valve 74. At this time, an icon indicating that the automatic work brake function is on is displayed on a cluster provided in the cab 16 (neither of which is illustrated).

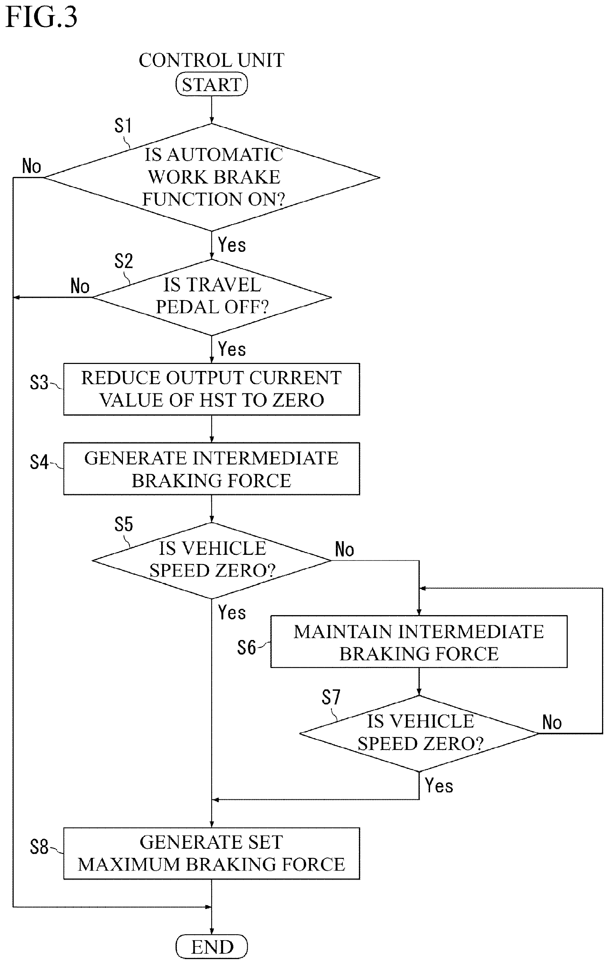

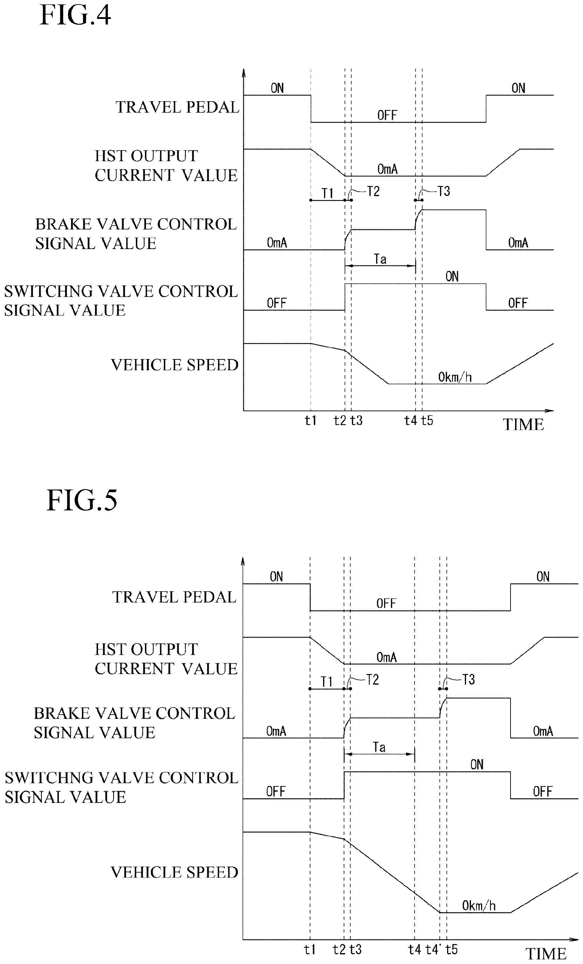

Next, the processing content of the control unit 50 related to the automatic work brake function will be described. FIG. 3 is a flowchart depicting the processing content of the control unit 50. FIG. 4 is a schematic diagram depicting one example of a timing chart corresponding to the flowchart in FIG. 3, and depicts the operated state of the travel pedal 42, the output signal value for controlling the operation of the HST (that is, driving the swash plate of the travel hydraulic pump), a control signal value for driving the brake valve 72, a control signal value for driving the switching valve 74, and changes over time in the vehicle speed of the working vehicle 1. FIG. 5 is a schematic diagram depicting another example of a timing chart corresponding to the flowchart in FIG. 3.

In step S 1, the control unit 50 determines whether the automatic work brake function is on or off. When the control unit 50 has determined that the automatic work brake function is on, the processing proceeds to step S2. On the other hand, when the control unit 50 has determined that the automatic work brake function is off, there is no need to control the automatic work brake and the processing flow reaches END.

In step S2, the control unit 50 determines whether the travel pedal 42 is on or off. When the control unit 50 has determined that the travel pedal 42 is off, the process proceeds to step S3. On the other hand, when the control unit 50 has determined that the travel pedal 42 is on, the processing flow reaches END.

In step S3, the control unit 50 reduces the output current value for driving the swash plate of the travel hydraulic pump to zero. After step S3, the process proceeds to step S4.

In step S4, the control unit 50 performs control to generate an intermediate braking force over a predetermined time Ta (that is, between time t2 and time t4). The intermediate braking force is a braking force set between a braking force of zero and a set maximum braking force described later, and has an aim of reducing the vehicle speed of the working vehicle 1 to zero. In more detail, by outputting a first signal to the auxiliary brake circuit 70, the control unit 50 switches the switching valve 74 from position A to position B (which switches the switching valve 74 on) and sets the brake valve 72 to a predetermined degree of opening (that is, a degree of opening that enables hydraulic oil to flow at a flow rate that generates the intermediate braking force). After step S4, the processing proceeds to step S5.

In step S5, the control unit 50 determines whether the vehicle speed of the working vehicle 1 is zero. In the present embodiment, the control unit 50 can make this determination based on the vehicle speed information detected by the vehicle speed sensor described earlier. When the control unit 50 has determined that the vehicle speed is zero, the processing proceeds to step S8. On the other hand, when the control unit 50 has determined that the vehicle speed is not zero, the processing proceeds to step S6.

In step S6, the control unit 50 performs control to continuously maintain the intermediate braking force. After step S6, the processing proceeds to step S7.

In step S7, the control unit 50 determines whether the vehicle speed of the working vehicle 1 is zero. When the control unit 50 has determined that the vehicle speed is zero, the processing proceeds to step S8. On the other hand, when the control unit 50 has determined that the vehicle speed is not zero, the control unit 50 returns to the position before step S6 (that is, the control unit 50 performs control to continuously maintain the intermediate braking force).

In step S8, the control unit 50 performs control to generate the set maximum braking force. The set maximum braking force is a braking force that firmly keeps the working vehicle 1 in a stopped state during work. In more detail, the control unit 50 outputs a second signal to the auxiliary brake circuit 70 to set the brake valve 72 at a predetermined degree of opening (that is, a degree of opening that enables hydraulic oil to flow at a flow rate that generates the set maximum braking force).

According to the present embodiment, since the control unit 50 performs stepped braking control where the set maximum braking force is generated after the intermediate braking force has first been generated for at least the predetermined period Ta, it is possible to prevent sudden braking when the work brake is applied. As one example, it is possible to prevent a situation where the set maximum braking force is unexpectedly applied and sudden braking occurs, even in the event of a problem where, due to a malfunction of the vehicle speed sensor, the vehicle speed is determined to be zero even though the working vehicle 1 is actually moving (travelling).

The control unit 50 determines the vehicle speed after generating the intermediate braking force (time t4). If the vehicle speed is not zero, the control unit 50 performs control to continuously maintain the intermediate braking force, which makes it possible to generate the set maximum braking force in a state where the working vehicle 1 has reliably stopped (time t4'). Accordingly, it is possible to achieve favorable braking without causing discomfort to the operator.

It is also preferable for the control unit 50 to determine whether the mode is the low-speed driving mode or the high-speed driving mode and to perform control so that when the vehicle is determined to be in the low-speed driving mode, the predetermined time Ta is set relatively short, and when the vehicle is determined to be in the high-speed driving mode, the predetermined time Ta is set relatively long. In this way, by using a configuration where the operating time (predetermined time) Ta of the intermediate braking force can be set according to the traveling state of the working vehicle 1, it is possible to apply the work brake efficiently.

As an example, a delay time T1 (that is, between time t1 and time t2) is provided between turning off of the travel pedal 42 and the generation of the intermediate braking force. By doing so, sudden changes in the behavior of the working vehicle 1 can be prevented.

It is also preferable for the intermediate braking force and the set maximum braking force to increase gradually at the start of application. In the present embodiment, a signal filter 84 is provided between the control unit 50 and the brake valve 72. By interposing the signal filter 84, the control signals (that is, the first signal and second signal) are sent from the control unit 50 to the brake valve 72 with the delay times T2 (between time t2 and time t3) and T3 (between time t4 (t4') and time t5), which make it possible to gradually increase the intermediate braking force and the set maximum braking force. By doing so, more favorable braking can be achieved. Here, it is preferable for the delay time T2 to be set relatively short in the low-speed driving mode and relatively long in the high-speed driving mode.

As described above, according to the working vehicle and the method for controlling a working vehicle described above, it is possible to improve operability when travelling and work are repeatedly performed.
Note that the present invention is not limited to the embodiments described above, and it is possible to make various changes within the scope of the present invention. In particular, although an automatic work brake function that generates an intermediate braking force and a set maximum braking force in a stepped manner has been described, it is possible to perform control that generates only the set maximum braking force, or control that additionally generates other braking forces.

## Claims

1. A working vehicle (1) comprising:
a travel unit (10) that is operated by travel operation means and a brake operation means;
a working unit (12, 14) that is operated by hydraulic pressure;
a main brake circuit (60) that generates a braking force in keeping with an operated amount when the brake operation means is in an operated state; and
an auxiliary brake circuit (70) that generates a predetermined braking force when the travel operation means is in a non-operated state.

2. The working vehicle (1) according to claim 1,
further comprising an HST for driving the travel unit (10) and a control unit (50) that controls operations of at least the travel unit (10) and the HST, wherein the control unit (50) reduces an output current value for control operations of the HST when the travel operation means has been in a non-operated state, and then outputs a first signal, as the predetermined braking force, to the auxiliary brake circuit (70), the first signal being set to an intermediate braking force between zero braking force and a set maximum braking force, when the output current value has become zero.

3. The working vehicle (1) according to claim 2,
wherein the auxiliary brake circuit (70) includes a solenoid valve that controls the predetermined braking force based on a control signal outputted from the control unit (50).

4. The working vehicle (1) according to claim 2 or claim 3,
wherein after the control unit has outputted the first signal for a predetermined time (Ta), the control unit outputs, when a vehicle speed is zero, a second signal that generates the set maximum braking force as the predetermined braking force to the auxiliary brake circuit (70) and continues to output, when the vehicle speed is not zero, the first signal that generates the intermediate braking force as the predetermined braking force to the auxiliary brake circuit.

5. The working vehicle (1) according to claim 4,
wherein the control unit (50) sets the predetermined time (Ta) relatively shorter in a low-speed travel mode and sets the predetermined time (Ta) relatively longer in a high-speed travel mode.

6. A method for controlling a working vehicle (1) that includes a travel unit (10) that is operated by travel operation means and a brake operation means and a working unit (12, 14) that is operated by hydraulic pressure, the method comprising:
generating a braking force in keeping with an operated amount when the brake operation means is in an operated state; and
generating a predetermined braking force when the travel operation means is in a non-operated state.
